# EUROPÄISCHE PATENTSCHRIFT

(11) **EP 1 330 329 B1**
(45) Veröffentlichungstag und Bekanntmachung des Hinweises auf die Patenterteilung: **22.09.2004**
(21) Anmeldenummer: 01992625.2
(22) Anmeldetag: 31.10.2001
(51) Int. Cl.: B23K 11/31, B23K 11/25, B23K 11/26

(54) **SCHWEISSKOPF**
WELDING HEAD
TETE DE SOUDAGE

(30) Priorität: 02.11.2000 DE 10054387; 19.02.2001 DE 10108032; 05.06.2001 DE 10127112
(43) Veröffentlichungstag der Anmeldung: 30.07.2003
(73) Patentinhaber: Reischmann, Leander, 87545 Burgberg-Häuser (DE)
(72) Erfinder: Reischmann, Leander, 87545 Burgberg-Häuser (DE)
(74) Vertreter: Otten, Herbert
(86) Internationale Anmeldenummer: PCT/DE2001/004080
(87) Internationale Veröffentlichungsnummer: WO 2002/036298

(56) Entgegenhaltungen:
- EP-A- 0 419 849
- DE-A- 3 241 897
- DE-A- 3 527 647
- GB-A- 2 268 730
- US-A- 5 386 092
- US-A- 5 478 982

## Beschreibung

Die Erfindung betrifft einen Schweißkopf nach dem Oberbegriff des Anspruchs 1.

Derartige Schweißköpfe werden in Einrichtungen zum Widerstandsschweißen eingesetzt. Bedingt durch die hohe Taktzahl, mit der Schweißköpfe in derartigen Einrichtungen in der Regel arbeiten, und die hohen Anforderungen an die Qualität der einzelnen Schweißungen ist es wichtig, die fehlerfreie Funktion eines Schweißkopfes zu überwachen. Aus dem Stand der Technik ist im Bereich der Mikroschweißtechnik für die Überwachung eines Schweißkopfes eine Wegmessung mittels Sensor bekannt. Hierdurch kann der Hub- bzw. der Verfahrweg der Elektrode gemessen werden. Aus dem Messwert kann beispielsweise auf den Einsinkweg einer Elektrode geschlossen werden. Nachteilig an einer derartigen Kontrolle ist, dass noch eine Vielzahl weiterer Parameter Einfluss auf die Qualität der Verschweißung haben, die durch die Wegmessung nicht erfasst werden können. Weiterhin ist es bekannt, bei großen Schweißköpfen mit dicken Elektroden im Bereich einer Elektrode einen Drucksensor anzuordnen. Nachteilig hierbei ist, dass der Sensor wegen seiner Nähe zur Schweißstelle hohen Temperaturen ausgesetzt ist und starken mechanischen Belastungen unterliegt, da jede Belastung der Elektrode unmittelbar auf diesen einwirkt. Eine gute Schweißung ist nur dann gewährleistet, wenn auch die Schweißmaschine keine Mängel aufweist. Aus diesem Grund ist es erforderlich, die folgenden Verschleißteile des Schweißkopfes bei jeder Schweißung auf ihre Funktion zu überprüfen.
- Die Führungswelle, welche zur Kraftübertragung zwischen dem Kolben des Antriebszylinders und der Elektrode zum Einsatz kommt, muss auf Leichtgängigkeit überwacht werden.
- Die Nachsetzfeder ist auf Veränderungen wie Materialerschlaffung oder -bruch zu überwachen.
- Der Zustellzylinders ist auf Dichtheit und Reibung zu überwachen.
- Die zuverlässige Klemmung der Elektroden, z.B. insbesondere nach einem Elektrodenwechsel, ist ebenfalls zu überwachen.

Weiterhin sind Schweißköpfe mit Schweißzangen bekannt, bei denen die beiden beweglichen Schweißzangenelemente, an denen die Elektroden befestigt sind, auf zwei versetzt zueinander verlaufenden Führungen angeordnet sind. Nachteilig an derartigen Schweißzangen ist, dass die Schweißzangenelemente mit unterschiedlichen Momenten auf die Führungen wirken, welche die Momente weitestgehend aufnehmen, da der Abstand zwischen der jeweiligen Elektrode (hier greift die Kraft an) und der jeweiligen Führung unterschiedlich ist. Dies führt zu einer Hemmung des Leichtlaufs der Schweißzangenelemente, der sich negativ auf das optimale Zustellen der Elektroden an die zu schweißenden Teile auswirkt. Eine solche Anordnung der Schweißzangenelemente ist deshalb für die Überwachung von Führungswelle, Nachsetzfeder, Zustellzylinder und Klemmung der Elektroden bzw. des Schweißvorgangs ungeeignet.

Der Erfindung liegt die Aufgabe zugrunde, für die Mikroschweißtechnik einen Schweißkopf zu entwickeln, der eine Überwachung der Leichtgängigkeit der Führungswelle, der Nachsetzfeder, der Funktion des Zustellzylinders, der Klemmung der Elektroden und somit des Schweißvorgangs mit einfachen Mitteln erlaubt und den Einsatz dieser Überwachung auch an mit einem Schweißkopf bestückten Schweißzangen erlaubt.

Diese Aufgabe wird ausgehend von den Merkmalen des Oberbegriffs des Anspruchs 1 erfindungsgemäß durch die kennzeichnenden Merkmale des Anspruchs 1 gelöst. In den Unteransprüchen sind vorteilhafte und zweckmäßige Weiterbildungen angegeben.

Durch den Einsatz der Kraftmessung zwischen Zylinder und Nachsetzfeder wird beim Widerstandsschweißen mit Mikroschweißtechnik durch eine Überwachung des Druckverlaufes und/oder des maximalem Druckes die Qualität jeder Schweißung kontrolliert. Hierdurch werden hohe Ausschussraten durch beispielsweise bei einer reinen Wegmessung unbemerkt gebliebene Fehler wie z.B. zu langsames Nachsetzen der Nachsetzfeder bzw. unzureichende Klemmung der daran befestigten Elektrode verhindert. Somit ist die Ausbringung einer mit einem derartigen Schweißkopf ausgestatteten Schweißmaschine erheblich verbessert. Der Gewährleistung einer kontinuierlichen Schweißkraft an den Elektroden kommt durch die oft unterschiedlichen Materialbeschaffenheiten der zu schweißenden Bauteile eine besondere Bedeutung zu. Das schnelle Nachsetzen der Elektroden während der Einleitung des Schweißstroms hängt von der Leichtgängigkeit der Führungswelle, der Funktion der Nachsetzfeder, der Funktion des Zustellzylinders und der sicheren Klemmung der Elektroden ab. Mittels des zentral angeordneten Drucksensors können alle genannten Funktionen des Schweißkopfes zu 100% kontrolliert werden. Somit ist eine Kontinuität der Qualität der Schweißungen garantiert und gleichzeitig über das "gut"-Signal der Kraftmessung eine Dokumentation jeder Schweißung für die Qualitätskontrolle möglich. Anders ausgedrückt erfolgt die Kraft- bzw. Druckmessung zwischen einem Druck ausübenden und einem Druck weiterleitenden Bauteil. Unter einem Druck ausübenden Bauteil ist z.B. der Zylinder bzw. dessen Kolben zu verstehen. Zu den Druck weiterleitenden Bauteilen gehört z.B. die Nachsetzfeder. Durch eine derartige Zwischenschaltung des Drucksensors ist es möglich, die Druck ausübenden Bauteile und die Druck weiterleitenden Bauteile zu überwachen, da beide mit dem Drucksensor in Verbindung stehen und auf diesen einwirken. Die Druck weiterleitenden Bauteile wirken praktisch mit einem Gegendruck auf den Sensor ein, der von der auf dem Werkstück aufliegenden Elektrode ausgeht. Somit ist der Sensor zwischen den Druck ausübenden und den Druck weiterleitenden Bauteilen eingespannt bzw. eingeklemmt.

Weiterhin ist die Einwirkung der von der Elektrode ausgehenden Belastungen auf den Sensor durch die Zwischenschaltung der Nachsetzfeder gedämpft. Hierdurch wird der Sensor geschont. Eine Überwachung von Zylinder und Führungswelle ist durch den direkten Kontakt des Sensors zu diesen Bauteilen möglich.

Durch die erfindungsgemäßen Maßnahmen ist es möglich, die Messung der Elektrodenkraft direkt an der Elektrode, ohne Abhängigkeit von der Größe, d.h. dem Querschnitt und der Form der Elektrode und/oder der verwendeten Zylindergröße durchzuführen. Bislang war die direkte Messung nur bei großen Elektroden möglich. Im Gegensatz zu bekannten Systemen ist die Kraftmessung direkt. Bei bekannten Systemen für die Mikroschweißtechnik ist eine Kraftmessung nur indirekt über Pneumatikdruck und die Zylindergröße möglich (F = p x A). Da die Elektrodenkraft jedoch ein Verfahrensparameter ist, von dessen Einhaltung primär das Gelingen einer guten Schweißverbindung abhängt, ist die Kenntnis der genauen Elektrodenkraft wichtig und somit maßgeblich für eine gute Schweißung. Die direkte Kraftmessung ermöglicht auch eine Regelung der Elektrodenkraft beim Einsatz von sogenannten Servo-Druckregelventilen. Ein direkter Vergleich zwischen Istwert und Sollwert ist möglich. Damit ist die Voraussetzung für eine Kraftregelung geschaffen.

Weiterhin ermöglicht eine derartige Aufnahme der Elektrodenkraft eine 100%ige Dokumentation der Elektrodenkräfte.

Unter einem Schweißkopf ist eine Baueinheit zu verstehen, die eine Elektrode und einen auf diese wirkenden Antrieb umfasst. Hierbei kommt vorzugsweise ein Linearantrieb zum Einsatz, welcher die Elektrode auf ein Werkstück zu und von diesem weg bewegt. Gegenüber der am Schweißkopf angeordneten Elektrode ist in der Regel eine zweite feststehende Elektrode angeordnet, auf der das zu schweißende Werkstück beim Schweißvorgang aufliegt. Bei einer Schweißzange handelt es sich um eine Vorrichtung, die wenigstens einen Antrieb aufweist, welcher zwei gegenüberliegende Elektroden aufeinander zu und voneinander weg bewegt. Somit umfasst eine Schweißzange die einzelnen Bauteile von ein oder zwei Schweißköpfen bzw. ist als Schweißkopf zu sehen, der einen gemeinsamen Antrieb für zwei Elektroden aufweist.

Durch die Anordnung der Schweißzangenelemente auf einer gemeinsamen Welle üben die Schweißzangen gleiche Momente auf die Welle aus. Hierdurch wird die Welle gleichmäßig belastet. Durch die Verbindung der Schweißzangenelemente zu einem C-Gestell bzw. zu einer Brücke werden die entgegengesetzten Momente weitestgehend im Gestell bzw. in der Brücke aufgefangen und bewirken kein Verkanten der Schweißzangenelemente auf der Welle, so dass ein optimaler Leichtlauf der Schweißzangenelemente auf der Welle bzw. Führung gewährleistet ist.

Weitere Einzelheiten der Erfindung werden in der Zeichnung anhand eines schematisch dargestellten Ausführungsbeispiels beschrieben. Hierbei zeigt:
- Figur 1: eine schematische Darstellung eines Schweißkopfes mit Schweißzangenelementen,
- Figur 2: eine detaillierte Darstellung des in Figur 1 gezeigten Schweißkopfes,
- Figur 3: einen Teilschnitt durch den in Figur 2 gezeigten Schweißkopf entlang der Schnittlinie III-III,
- Figur 4: eine teilweise geschnittene Seitenansicht einer Kraftmesseinheit,
- Figur 5: die in Figur 1 dargestellte Zylinderkupplung in Einzeldarstellung und
- Figur 6: das in Figur 1 dargestellte Drehteil in Einzeldarstellung.

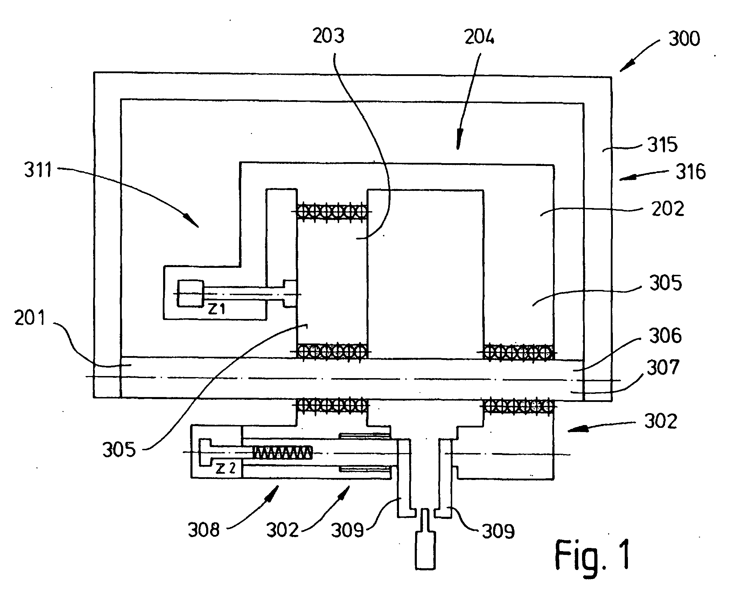

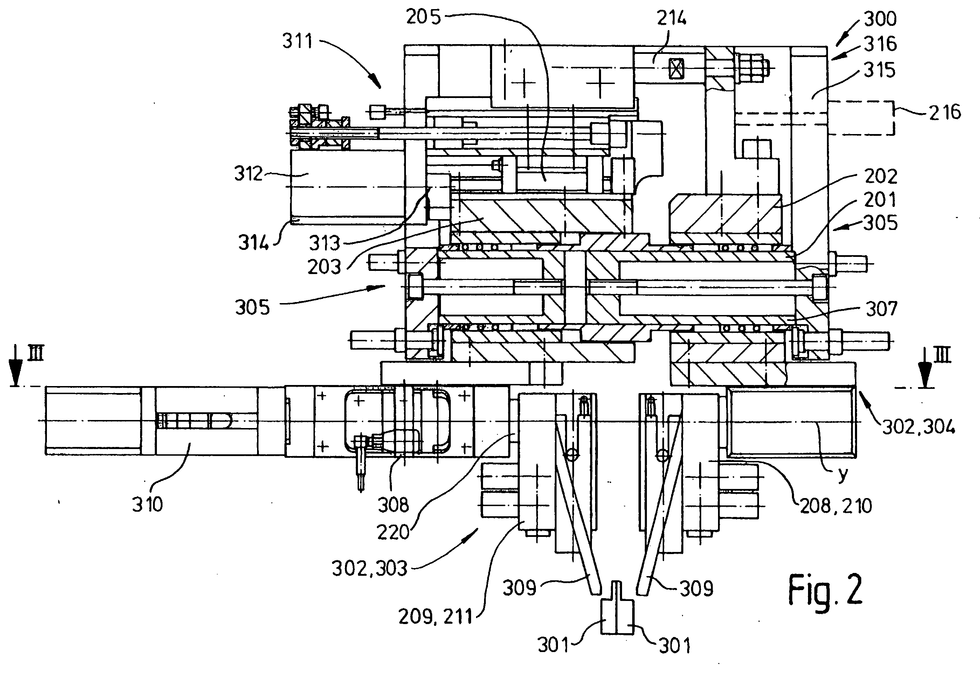

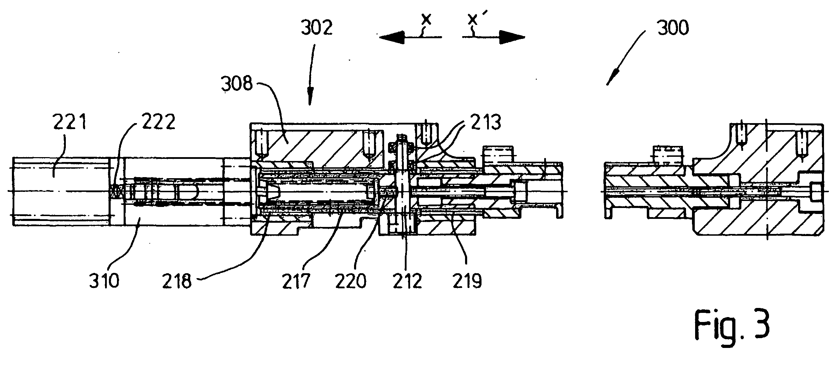

In Figur 1 ist ein Schweißkopf 300 schematisch dargestellt. Der Schweißkopf 300 umfasst zwei Schweißzangenelemente 302, welche Elektroden 309 halten, zwei Führungsschlitten 305, ein Führungsmittel 306, das als gemeinsame Welle 307 ausgebildet ist, eine Antriebszylindereinheit 311, eine Nachsetzeinheit 308 mit einer Kraftmesseinrichtung 310 (siehe Figur 2) und ein Gehäuse 315. Das Gehäuse 315 und die Welle 307 bilden eine Einheit 316, an der die anderen erwähnten Bauteile entlang der Welle 307 verfahrbar sind. In den Figuren 2 und 3 ist der in Figur 1 gezeigte Schweißkopf 300 detaillierter dargestellt.

Alle dynamischen bzw. beweglichen Elemente des Schweißkopfes 300 sind auf der als Querwelle 201 ausgebildeten Welle 307 leicht verschiebbar bzw. schwimmend gelagert. Die Querwelle 201 ist mit dem Gehäuse 315 formschlüssig verbunden. Die beiden Querblöcke 202 und 203 bilden ein auf der Querwelle 201 verschiebbares C-förmiges Gestell 204 (siehe insbesondere Figur 1). Durch den Führungswagen 205 (siehe Figur 2) ist es zusätzlich mittels des Pneumatikzylinders 312 möglich, nur den Querblock 203 nach rechts zu verschieben. An der Unterseite der Querblöcke 202 und 203 bzw. an einem ersten Schweißzangenelement 303 und einem zweiten Schweißzangenelement 304 ist eine Nachsetzeinheit 308 mit Kraftmessung 310 und Elektrodenhalter 209 bzw. ein Elektrodenhalter 208 angeflanscht. Der Schweißkopf 300 kann je nach Bedarf auch mit zwei Nachsetzeinheiten oder mit zwei Elektrodenhaltern ohne Nachsetzeinheit ausgerüstet werden. Eine Führungswelle 220 der Nachsetzeinrichtung 308 ist durch einen Querbolzen 212 formschlüssig mit dem Schweißzangenelement 302 verbunden und durch einen Zustellzylinder 221 mit einer Kolbenstange 222 in Pfeilrichtung x, x' verschiebbar. Der Querbolzen 212 ist mit zwei Kugellagern 213 ausgerüstet und dient als Verdrehsicherung für die Führungswelle 220. Alle Längenmessungen bzw. Wegmessungen werden am Querbolzen 212 abgenommen, weil dieser durch seinen Formschluss mit der Führungswelle 220 sichere bzw. unverfälschte Daten an das Längenmesssystem bzw. Wegmesssystem liefert. Durch die zusätzliche Kunststoffhülse 217 ist außerdem gewährleistet, dass die Kugelkäfige 218 bzw. 219 der Führungswelle 220 bei jedem Hub der Nachsetzeinheit 308 in ihre Ausgangsstellungen gedrückt werden. Es wird somit ein Blockieren der Nachsetzeinheit 308 durch Verrutschen der Kugelkäfige 218 bzw. 219 verhindert. Die Elektrodenhalter 208, 209 bzw. die kühlbaren Elektrodenhalter 210, 211 sind um 180 Grad um eine Längsachse y schwenkbar. Somit ist ein Widerstandsschweißen auch bei schwer zugänglichen Schweißstellen, durch einfaches Einstellen bzw. Verschwenken der Elektrodenhalter 208, 209 bzw. 210, 211 ermöglicht. Zwischen den Elektroden 309 sind im Betrieb des Schweißkopfes 300 zu verschweißende Schweißteile 301 angeordnet. Durch ein Entfernen des Verbindungsbolzens 214 kann beim Schweißkopf 300 die C-Gestellfunktion aufgehoben werden, das heißt das C-Gestell 204 geteilt werden. Durch das Anbringen eines zweiten Zustellzylinder 216 (gestrichelt dargestellt) können die Querblöcke 202 und 203 bzw. die Führungsschlitten 305 bzw. die Schweißzangenelemente 302 dann unabhängig voneinander betrieben werden.

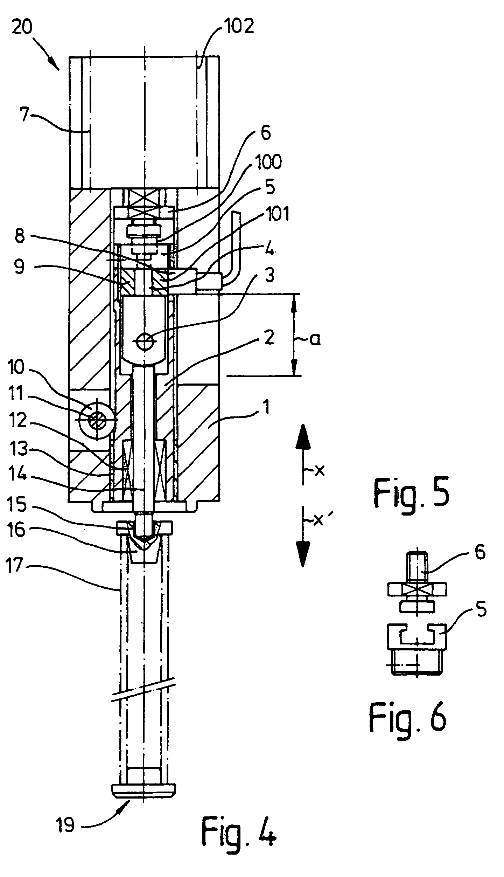

In Figur 4 ist ein Schweißkopf 20 bzw. eine Kraftmesseinrichtung für einen Schweißkopf dargestellt. Diese besteht im Wesentlichen aus einem Gehäuse 1, in dem eine Welle 2 gelagert ist, in der wiederum ein Stößel 14 in einem Kugellager 12 geführt ist und einem Zylinder 7. Ein Kraftmesssensor 9 ist in der Nachsetzfederzustellwelle 2 eingebaut. Das Gehäuse 1 ist so ausgelegt, dass es als Austauschkomponente zum Schweißkopf 20 angeflanscht werden kann. Ein Lager 10 tangiert die Welle 2 mit leichtem Spiel, um die für das Anschlusskabel 8 des Sensors 9 erforderliche Verdrehsicherung der Welle 2 zu garantieren. Der Sensor 9 wird mittels einer Zylinderschraube 100 und einer Zentrierbuchse 101 zwischen Drehteilen 3 und 5 eingespannt und kalibriert. In die Welle 2 ist an einer Unterseite das Kugellager 12 eingepresst, in welchem der Stößel 14 bei Betrieb des Zustellzylinders 7 (es wird jetzt die Nachsetzfeder gedrückt) die Kraft an den Sensor 9 weiterleitet. Das Drehteil 3 ist an der Unterseite ballig, um etwaige Kraftnebenschlüsse zu verhindern. Auf ein am Stößel 14 angeordnetes Drehteil 16 ist eine Feder 17 in der letzten Windung aufgepresst. In das Drehteil 16 ist außerdem ein O-Ring 15 eingepresst, welcher der Feder 17 einen seitlichen Lageausgleich ermöglicht und andererseits einen schnellen Austausch der Feder 17 garantiert. An einem freien Ende 19 der Feder 17 ist eine nicht dargestellte Elektrode angeordnet. Die Zylinderkupplung 6 (siehe auch Figur 5) ist in einen Zylinderkolben des Zylinders 7 eingeschraubt und weist einen Bund auf. Der Austausch des Zylinders 7 ist somit sehr einfach. Hierzu werden Befestigungsschrauben 102 am Zylinder 7 gelöst, dieser nach oben gezogen und dann seitlich aus der T-Nut des Drehteils 5 (siehe auch Figur 6) herausgezogen. Der Sensor 9 ist in die hülsen- bzw. rohrförmige Welle 2 eingeschraubt und mit dieser im Gehäuse 1 in Pfeilrichtung x bzw. x' um einen Hub a verfahrbar. Im Bereich des Anschlusskabels 8 weist die Welle 2 einen Schlitz oder eine Ausnehmung auf. Der Stößel 14 steht über das Drehteil 3 mit dem Sensor 9 bzw. der Welle 2 in Verbindung. Hierdurch wirken alle zwischen Zylinder 7 und Elektrode auftretenden Druckkräfte auf den Sensor 9, wobei die Verbindung zwischen Elektrode und Sensor 9 im Wesentlichen durch den Stößel 14 und die Feder 17 hergestellt ist.

### Bezugszeichenliste:

- 1: Gehäuse
- 2: Welle
- 3: Drehteil
- 4 5: Drehteil
- 6: Zylinderkupplung
- 7: Zustellzylinder
- 7a: Kolbenstange von 7
- 8: Anschlusskabel
- 9: Kraftmesssensor
- 10: Lager
- 11 12: Kugellager
- 13 14: Stößel
- 15: O-Ring
- 16: Drehteil
- 17: Feder
- 18 19: Ende
- 20: Schweißkopf
- 100: Zylinderschraube
- 101: Zentrierbuchse
- 102: Befestigungsschraul
- 201: Querwelle
- 202: Querblock
- 203: Querblock
- 204: C-Gestell
- 205: Führungswagen
- 206 207 208: Elektrodenhalter
- 209: Elektrodenhalter
- 210: kühlbarer Elektrodenhalter
- 211: kühlbarer Elektrodenhalter
- 212: Querbolzen
- 213: Kugellager
- 214: Bolzen
- 215 216 217: Kunststoffhülse
- 218: Kugelkäfig
- 219: Kugelkäfig
- 220: Führungswelle = 2
- 221: Zustellzylinder = 7
- 222: Kolbenstange = 7a
- 300: Schweißkopf
- 301: Schweißteil
- 302: Schweißzangenelement
- 303: erstes Schweißzangenelement
- 304: zweites Schweißzangenelement
- 305: Führungsschlitten
- 306: Führungsmittel
- 307: gemeinsame Welle
- 308: Nachsetzeinheit = 17
- 309: Schweißelektrode
- 310: Kraftmesseinrichtung = 9
- 311: Antriebszylindereinheit
- 312: Antriebszylinder
- 313: Kolbenstange
- 314: Zylindergehäuse
- 315: Gehäuse
- 316: Einheit

## Patentansprüche

1. Schweißkopf zur Verbindung von Schweißteilen (301) mittels Widerstandsschweißens mit einer über einen Zustellzylinder (7, 221) beweglichen Elektrode (309), wobei ein Sensor (9, 310) zwischen einer Kolbenstange (7a, 222) des Zustellzylinders (7, 221) und einer Feder (17) angeordnet ist, **dadurch gekennzeichnete dass** der Sensor (9, 310) in einer in einem Gehäuse (1) gelagerten hülsen- bzw. rohrförmigen Zustellwelle (2, 220) zwischen Kontaktmitteln (3, 5) eingespannt und kalibriert ist

2. Schweißkopf nach Anspruch 1, **dadurch gekennzeichnet, dass** der Sensor (9, 310) als Drucksensor für die Kraftmessung ausgebildet ist.

3. Schweißkopf nach einem der vorhergehenden Ansprüche, **dadurch gekennzeichnet, dass** der Sensor (9, 310) in einem Gehäuse (1) des Schweißkopfes (20) bzw. in der Nachsetzeinheit (17) angeordnet ist.

4. Schweißkopf nach einem der vorhergehenden Ansprüche, **dadurch gekennzeichnet, dass** das Gehäuse (1) die Welle (2) und den Stößel (14) wenigstens teilweise aufnimmt.

5. Schweißkopf nach einem der vorhergehenden Ansprüche, **dadurch gekennzeichnet, dass** der Sensor (9) in der Welle (2) angeordnet ist.

6. Schweißkopf nach einem der vorhergehenden Ansprüche, **dadurch gekennzeichnet, dass** der Sensor (9) fest mit der Welle (2) verbunden ist.

7. Schweißkopf nach einem der vorhergehenden Ansprüche, **dadurch gekennzeichnet, dass** die Welle (2) als Nachsetzfederzustellwelle ausgebildet ist.

8. Schweißkopf nach einem der vorhergehenden Ansprüche, **dadurch gekennzeichnet, dass** der Sensor (9) mittels einer Zylinderschraube (100) und einer Zentrierbuchse (101) zwischen Kontaktmittel (3, 5) eingespannt und kalibriert ist.

9. Schweißkopf nach einem der vorhergehenden Ansprüche, **dadurch gekennzeichnet, dass** die Kontaktmittel als Drehteile (3, 5) ausgebildet sind.

10. Schweißkopf nach einem der vorhergehenden Ansprüche, **dadurch gekennzeichnet, dass** die Kolbenstange (7a) des Zylinders (7) über eine C-Führung (6, 5) mit dem Sensor (9) bzw. der Welle (2) gekuppelt ist.

11. Schweißkopf (300) nach Anspruch 1, **dadurch gekennzeichnet, dass** Schweißzangenelemente (302, 303, 304) an längsverschiebbaren Führungsschlitten (305) gegeneinander längsverschiebbar gelagert sind, und zur Vermeidung von unterschiedlichen Drehmomenten auf Führungsmittel (306), welche durch die auf die Schweißelektroden (309) wirkenden Kräfte verursacht sind, die Schweißzangenelemente (302, 303, 304) auf einer gemeinsamen Welle (307) gelagert sind.

12. Schweißkopf nach Anspruch 11, **dadurch gekennzeichnet, dass** die Welle (307) einen kreisrunden Querschnitt aufweist.

13. Schweißkopf nach einem der Ansprüche 11 bis 12, **dadurch gekennzeichnet, dass** die Führungsschlitten (305) nahezu kraftfrei gegeneinander auf die Schweißteile (301) zufahrbar sind.

14. Schweißkopf nach einem der Ansprüche 11 bis 13, **dadurch gekennzeichnet, dass** wenigstens einem Schweißzangenelement (302, 303, 304) eine eigene Nachsetzeinheit (308) zugeordnet ist, welche die Schweißelektroden (309) beim Schweißvorgang nachführt.

15. Schweißkopf nach Anspruch 14, **dadurch gekennzeichnet, dass** die Nachsetzeinheit (308) eine Kraftmesseinrichtung (310) beinhaltet.

16. Schweißkopf nach einem der Ansprüche 11 bis 15, **dadurch gekennzeichnet, dass** die Schweißzangenelemente (302, 303, 304) schwimmend zueinander gelagert sind, wobei mittels einer Antriebszylindereinheit (311) das erste Schweißzangenelement (303) mittels der Kolbenstange (313) und das zweite Schweißzangenelement (304) mittels des Zylindergehäuses (314) der Antriebszylindereinheit (311) bzw. eines Antriebszylinders (312) bewegbar sind.

## Claims

1. Welding head for connecting weld elements (301) by means of resistance welding, comprising an electrode (309) which is movable via a feed cylinder (7, 221), a sensor (9, 310) being arranged between a piston rod (7a, 222) of the feed cylinder (7, 221) and a spring (17), **characterised in that** the sensor (9, 310) is clamped and calibrated between contact means (3, 5) in a sleeve-shaped or tubular feed shaft (2, 220) mounted in a housing (1).

2. Welding head according to claim 1, **characterised in that** the sensor (9, 310) is formed as a pressure sensor for the force measurement.

3. Welding head according to any one of the preceding claims, **characterised in that** the sensor (9, 310) is arranged in a housing (1) of the welding head (20) or in the readjusting unit (17).

4. Welding head according to any one of the preceding claims, **characterised in that** the housing (1) at least partially receives the shaft (2) and the plunger (14).

5. Welding head according to any one of the preceding claims, **characterised in that** the sensor (9) is arranged in the shaft (2).

6. Welding head according to any one of the preceding claims, **characterised in that** the sensor (9) is rigidly connected to the shaft (2).

7. Welding head according to any one of the preceding claims, **characterised in that** the shaft (2) is formed as a readjusting spring feed shaft.

8. Welding head according to any one of the preceding claims, **characterised in that** the sensor (9) is clamped and calibrated between contact means (3, 5) by means of a cap screw (100) and a centring bush (101).

9. Welding head according to any one of the preceding claims, **characterised in that** the contact means are formed as turned parts (3, 5).

10. Welding head according to any one of the preceding claims, **characterised in that** the piston rod (7a) of the cylinder (7) is coupled to the sensor (9) or the shaft (2) via a C-guide (6, 5).

11. Welding head (300) according to claim 1, **characterised in that** welding gun elements (302, 303, 304) are mounted in a longitudinally displaceable manner relative to one another on longitudinally displaceable guide slides (305) and to avoid different torques on guide means (306) which are caused by the forces acting on the welding electrodes (309), the welding gun elements (302, 303, 304) are mounted on a common shaft (307).

12. Welding head according to claim 11, **characterised in that** the shaft (307) has a circular cross-section.

13. Welding head according to any one of claims 11 to 12, **characterised in that** the guide slides (305) can be moved relative to one another towards the weld elements (301) virtually free of force.

14. Welding head according to any one of claims 11 to 13, **characterised in that** a separate readjusting unit (308) which corrects the welding electrodes (309) in the welding process, is associated with at least one welding gun element (302, 303, 304).

15. Welding head according to claim 14, **characterised in that** the readjusting unit (308) contains a force measuring device (310).

16. Welding head according to any one of claims 11 to 15, **characterised in that** the welding gun elements (302, 303, 304) are mounted in a floating manner with respect to one another, wherein, by means of a drive cylinder unit (311),the first welding gun element (303) is movable by means of the piston rod (313) and the second welding gun element (304) is movable by means of the cylinder housing (314) of the drive cylinder unit (311) or a drive cylinder (312).

## Revendications

1. Tête de soudage destinée à assembler des pièces à souder (301) par soudage par résistance, comprenant une électrode (309) pouvant être déplacée au moyen d'un vérin d'approche (7, 221), avec un capteur (9, 310) disposé entre une tige de piston (7a, 222) du vérin d'approche (7, 221) et un ressort (17),
**caractérisée en ce que**
le capteur (9, 310) est encastré et calibré entre des moyens de contact (3, 5) dans un arbre d'approche (2, 220) en forme de manchon ou de tube qui tourillonne dans un carter (1).

2. Tête de soudage selon la revendication 1,
**caractérisée en ce que**
le capteur (9, 310) est constitué par un capteur de pression pour la mesure d'une force.

3. Tête de soudage selon une des revendications précédentes,
**caractérisée en ce que**
le capteur (9, 310) est disposé dans un carter (1) de la tête de soudage (20) ou dans l'unité rapportée (17).

4. Tête de soudage selon une des revendications précédentes,
**caractérisée en ce que**
le carter (1) renferme au moins partiellement l'arbre (2) et le poussoir (14).

5. Tête de soudage selon une des revendications précédentes,
**caractérisée en ce que**
le capteur (9) est disposé dans l'arbre (2).

6. Tête de soudage selon une des revendications précédentes,
**caractérisée en ce que**
le capteur (9) est relié rigidement à l'arbre (2).

7. Tête de soudage selon une des revendications précédentes,
**caractérisée en ce que**
l'arbre (2) est constitué par un arbre d'approche à ressort rapporté.

8. Tête de soudage selon une des revendications précédentes,
**caractérisée en ce que**
le capteur (9) est encastré et calibré entre des moyens de contact (3, 5) au moyen d'une vis cylindrique (100) et d'une douille de centrage (101).

9. Tête de soudage selon une des revendications précédentes,
**caractérisée en ce que**
les moyens de contact sont constitués par des pièces tournées (3, 5).

10. Tête de soudage selon une des revendications précédentes,
**caractérisée en ce que**
la tige de piston (7a) du vérin (7) est accouplée au capteur (9) ou l'arbre (2) au moyen d'un guidage en forme de C (6, 5).

11. Tête de soudage (300) selon la revendication 1,
**caractérisée en ce que**
des éléments de pince à souder (302, 303, 304) sont montés mobiles en translation longitudinale l'un par rapport à l'autre sur des chariots de guidage (305) mobiles en translation longitudinale, et, pour éviter différents couples sur des moyens de guidage (306), qui sont engendrés par les forces agissant sur les électrodes de soudage (309), les éléments de pince à souder (302, 303, 304) sont montés rotatifs sur un arbre commun (307).

12. Tête de soudage selon la revendication 11,
**caractérisée en ce que**
l'arbre (307) présente une section circulaire.

13. Tête de soudage selon une des revendications 11 à 12,
**caractérisée en ce que**
les chariots de guidage (305) peuvent être amenés sur les pièces à souder (301) presque sans action de force de l'un sur l'autre.

14. Tête de soudage selon une des revendications 11 à 13,
**caractérisée en ce qu'**
à au moins un élément de pince à souder (302, 303, 304) est associée une unité rapportée (308) qui lui est propre et qui accompagne le mouvement des électrodes de soudage (309) lors de l'opération de soudage.

15. Tête de soudage selon la revendication 14,
**caractérisée en ce que**
l'unité rapportée (308) renferme un dispositif de mesure de force (310).

16. Tête de soudage selon une des revendications 11 à 15,
**caractérisée en ce que**
les éléments de pince à souder (302, 303, 304) sont montés flottants l'un par rapport à l'autre, et, sous l'action d'une unité de cylindre d'entraînement (311), le premier élément de pince à souder (303) peut être déplacé au moyen de la tige de piston (313) et le deuxième élément de pince à souder (304) peut être déplacé au moyen du corps de vérin (314) de l'unité de vérin d'entraînement (311) ou d'un vérin d'entraînement (312).
